# EUROPEAN PATENT APPLICATION

(11) **EP 3 718 744 A1**
(43) Date of publication of application: **07.10.2020**
(21) Application number: 19461526.6
(22) Date of filing: 01.04.2019
(51) Int. Cl.: B29C 64/118, B29C 64/232, B29C 64/364, B33Y 30/00, B33Y 40/00

(54) **3D PRINTER WITH VARIABLE VOLUME WORKING CHAMBER**

(71) Applicant: 3D Gence Spólka Z Ograniczona Odpowiedzialnoscia, 40-085 Katowice (PL)
(72) Inventor: Kostrzewa, Szymon, 05-622 Belsk Du y (PL); Wilk, Krzysztof, 41-400 Mys owice (PL); Wolnicki, Przemys aw, 42-100 K obuck (PL); Jop, Piotr, 27-225 Paw ów (PL)
(74) Representative: AOMB Polska Sp. z.o.o.

(57) **Abstract**

A 3D printer with variable volume working chamber. The printer comprises a print bed (8) located on a vertically movable piston (10) with the cross section constituting at least 60% of the surface area of the print bed (8), attached to a vertical guide and drive system (1) of the print bed (8), wherein the volume of the working chamber (3) is varied by the movement of the piston (10) so that in the upper starting position of the piston (10), the volume of the working chamber is the smallest, while in the lower final position of the piston (10) it is the largest.

## Description

### Technical field

The invention relates to a 3D printer with variable volume working chamber.

### Prior art

In a known 3D printer solution, the heated working chamber has a constant volume. The chamber comprises a print bed driven by a vertical guide and drive system. The printer's working chamber is limited from above by a horizontal guide and drive system of the printing module. To increase the printing temperature, heating and insulating elements are placed around the working chamber.

A disadvantage of the known solution is a long time of heating the working chamber by a large volume of air contained therein. The known printer has high consumption of energy needed to stabilize temperature in the working chamber at a given level. In the known printer, the printing preparation phase is time-consuming and expensive.

### Summary of the invention

The object of the present invention is to decrease consumption of energy needed to heat the air surrounding the print bed in the working chamber.

In a 3D printer according to the invention, a print bed is located on the upper surface of a vertically movable piston. The piston is attached to a vertical guide and drive system. In the upper, initial position of the piston in the printing process, the largest part of the working chamber is filled by the piston. To reduce the remaining chamber volume to be heated, the upper surface of the piston constitutes at least 60% of the print bed surface area, and in a preferred embodiment it constitutes the entire bottom of the working chamber.

In one of the embodiments, the piston cross section may also be larger than the surface area of the print bed.

Preferably, at least in the range of the vertical movement of the print bed, the cross-section of the piston is constant and equal to its top surface. In the upper position of the piston, the volume of the working chamber is the smallest, while in the lower position the largest, wherein the part of the space above the piston is filled by the printed model.

### Advantageous effects of the invention

Due to the working chamber volume considerably reduced by the piston, a printer according to the invention requires a much smaller portion of energy to be supplied to heat the air before the printing starts, and thus the time of printer preparation is shorter.

During printing, the heated volume of air and the energy required for it are also reduced in relation to the known solution. As a consequence of this advantage, the power of the heating device installed in the printer can be significantly reduced. Electricity consumption during printer operation is also lower.

### Brief description of the drawings

The object of the invention is illustrated in an embodiment in the drawings, wherein:

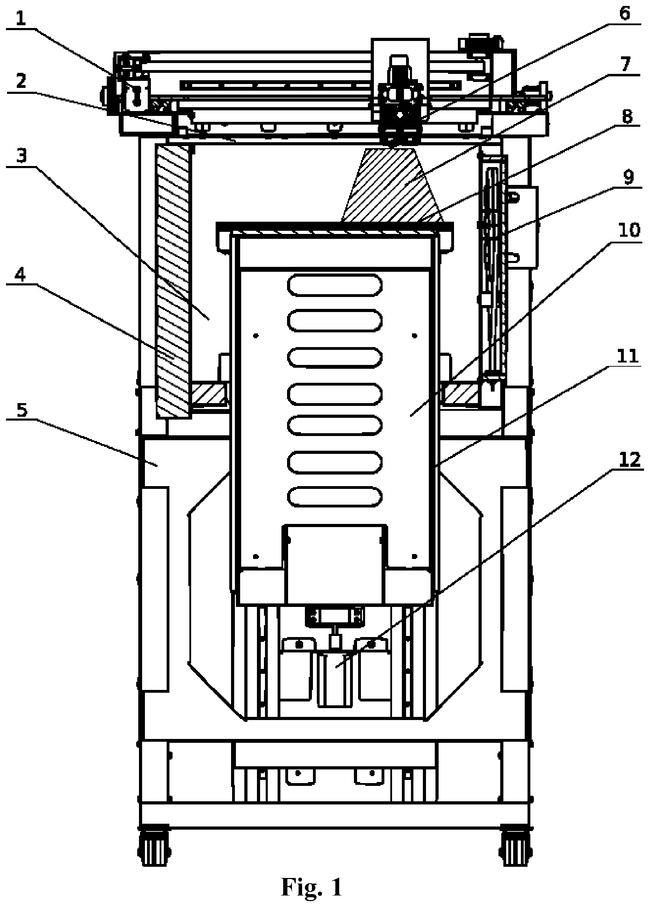

- Fig. 1: - presents the printer in a vertical cross-section with the piston in the working position during printing,

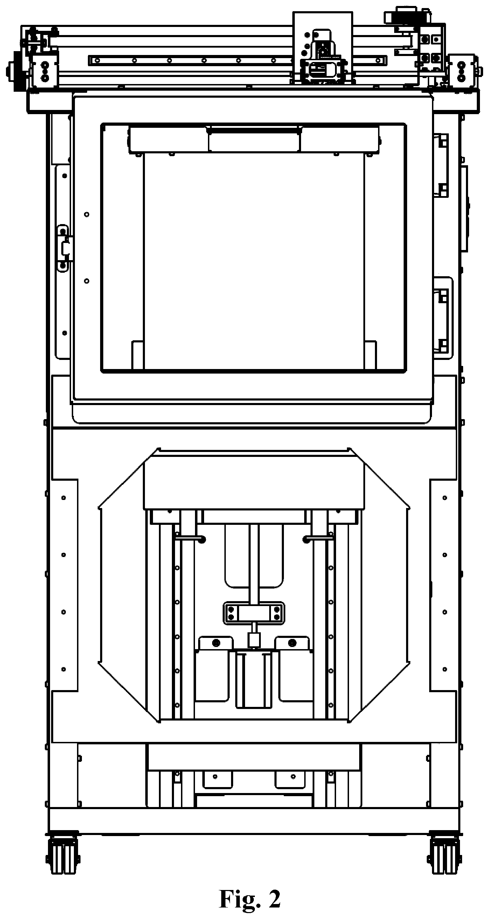

- Fig. 2: - presents the printer in a front view with the piston in the maximally raised position, and

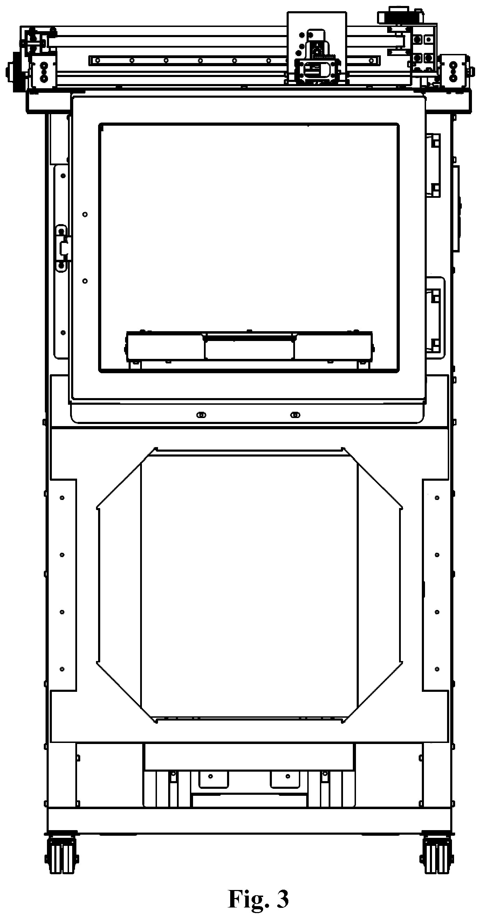

- Fig.3: - presents the printer in a front view with the piston in the maximally lowered position.

### Detailed description of the preferred embodiments

A printer frame 5 includes heating elements 9, a print bed 8, a piston 10, a printing module 6, a guide and drive system 1 of the printing module 6, thermal shields 2 and thermal insulation 4 of a working chamber 3.

The print bed 8 is mounted on a vertically slidable piston 10 driven by the guide and drive system 12. The piston walls 10 comprise thermal insulation 11. In the drawing illustrating the invention in an embodiment, a printed model 7 is located on the print bed 8.

The vertical cross-section of the piston 10 constitutes at least 60% of the working surface area of the print bed 8, and may preferably amount to, for example, 60%, 70%, 80% or 90% of the print bed surface area 8. According to another preferred embodiment, the cross-section of the piston 10 may be equal to the surface area of the print bed 8. In turn, in yet another preferred embodiment, the cross-section of the piston 10 is larger than the surface area of the print bed 8 and can maximally constitute the bottom of the working chamber 3.

It is advantageous if the upper surface of the piston 10 is the movable bottom of the working chamber 3.

In one of preferred embodiments, the horizontal cross-section of the piston 10 is constant at least in the vertical movement range of the print bed 8 in the space of the working chamber 3. Notwithstanding this, other variants are conceivable, wherein the cross section of the piston 10 moving inside the working chamber 3 is not constant over the entire length of the piston 10 and can be variable, so that the piston occupies a larger volume of the working chamber, preferably more than half the working volume.

During printer preparation for the 3D printing process, the piston 10 is placed in the highest possible position, so that the air inside the working chamber 3 has the smallest volume. For heating to the printing temperature, the printer is equipped with a heating system 9. During operation, the position of the print bed 8 with the piston 10 is continuously lowered by the height of the printed layer of the model 7. After the printing is completed, the piston 10 is in the lowest position.

## Claims

1. A 3D printer comprising a vertically movable print bed (8) situated within a working chamber (3), a horizontal guide and drive system (1) of a printing module, heating and insulating elements, as well as a vertical guide and drive system (12) of the print bed (8), **characterised in that** the print bed (8) is located on a vertically movable piston (10) associated with the vertical guide and drive system (12) of the print bed (8), the cross section of the piston (10) constituting at least 60% of the surface area of the print bed (8), wherein the volume of the working chamber (3) is varied by the movement of the piston (10) so that in the upper starting position of the piston (10), the volume of the working chamber (3) is the smallest, while in the lower final position of the piston (10) it is the largest.

2. The printer according to claim 1, **characterised in that** the upper surface of the piston (10) constitutes the movable bottom of the working chamber (3).

3. The printer according to claim 1, **characterised in that** the cross section of the piston (10) is preferably the same as the surface area of the print bed (8).

4. The printer according to claim 1 or 2, **characterised in that** the cross section of the piston (10) is greater than the surface area of the print bed (8), and preferably constitutes the bottom of the working chamber (3).

5. The printer according to any preceding claim, **characterised in that** the horizontal cross section of the piston (10) is essentially constant at least in the range of the vertical movement of the print bed (8) in the space of the working chamber (3).
